# EUROPEAN PATENT SPECIFICATION

(11) **EP 4 303 854 B1**
(45) Date of publication and mention of the grant of the patent: **17.12.2025**
(21) Application number: 23183562.0
(22) Date of filing: 05.07.2023
(51) Int. Cl.: G09B 23/30

(54) **ORGAN MODEL CONTAINING ELASTIC PASSAGE AND METHOD FOR PRODUCING THE SAME**
ORGANMODELL MIT ELASTISCHEM DURCHGANG UND HERSTELLUNGSVERFAHREN DAFÜR
MODÈLE D'ORGANE CONTENANT UN PASSAGE ÉLASTIQUE ET SON PROCÉDÉ DE PRODUCTION

(30) Priority: 06.07.2022 CN 202210797760
(43) Date of publication of application: 10.01.2024
(73) Proprietor: HONEST MEDICAL CHINA CO., LTD., ZhuHai 519031 (CN)
(72) Inventor: LEI, Chi-Weng, ZhuHai 519031 (CN); NI, Jui-Chung, ZhuHai 519031 (CN)
(74) Representative: Viering, Jentschura & Partner mbB Patent- und Rechtsanwälte

(56) References cited:
- CN-U- 205 068 965
- US-A1- 2008 076 101

## Description

### BACKGROUND OF THE INVENTION

### 1. Technical Field

The present invention relates to a method for producing an organ model containing an elastic passage according to the preamble of claim 1. More particularly, the present invention relates to a method for producing an organ model that is composed of elastic, hollow, artificial vessels, and an artificial organ body, wherein the hollow, artificial vessels have proper elasticity making them suitable for simulating behavior of vessels with changing blood pressures.

### 2. Description of Related Art

China Patent Publication No. CN105719550B discloses a tumor resection practice model and its manufacturing method. The manufacturing method of the tumor resection practice model includes the following steps: Step 1: acquiring a CT image or an MR image of a patient and performing stereo reconstruction; Step 2: acquiring a three-dimensional model of an organ intended to receive tumor resection; Step 3: hollowing the three-dimensional model; Step 4: acquiring a three-dimensional model of tumor inside the organ; Step 5: developing a practice mold of the organ; Step 6: producing the practices mold by 3D-printing; and Step 7: producing the practice model of the organ. Thereby, a model resembling a tumor-bearing organ of a patience intending to receive surgery can be produced for the use of teaching and practicing surgical skills.

While the prior disclosure is applicable to produce tumor-bearing organ models for teaching and practicing use, an organ model such made is focused on building a tumor model and provides no technical means for forming blood vessels, and particularly elastic vessels, in the organ model. Taking practice for hepatectomy for example, in real-world surgical simulation, one particular purpose for a surgeon to conduct surgical practice is to prevent accidental damage to blood vessels, yet an organ model manufactured using the prior-art method is unable to provide artificial vessels with good bio-fidelity.

Japan Patent Publication No. JP2016139069 discloses an organ model excellent in biological safety and possibly allowing a high learning effect. The known model is usable in procedural training, simulation, or selection of jigs to be used, by a surgeon before surgery. The prior disclosure provides an organ model that imitates a biological portion is structured with an addition-reaction-type organic silicone resin using a platinum catalyst. In the organ model, the addition-reaction-type organic silicone resin is applied to the surface of a mold made of a solvent-soluble resin, so as to produce the biological portion having a predetermined thickness after the addition-reaction-type organic silicone resin is cured and the mold is removed using a solvent.

Nevertheless, this prior patent document also fails to disclose production of organ models with elastic vessels.

CN 205 068 965 U discloses an organ model for being used in teaching anatomy, wherein the organ model comprises: a first artificial tissue, being a passage having a plurality of branches that is formed according to a vascular pattern in a visceral organ of an animal, and a second artificial tissue being formed according to a shape of the organ and being stretchable.

US 2008/076101 A1 discloses another organ model and the production method thereof.

### SUMMARY OF THE INVENTION

In view of the shortcomings of the prior art, the objective of the present invention is to provide a method for producing an organ model containing an elastic passage.

In order to achieve the forgoing objective, the present invention adopts the following technical means.

The present invention provides a method for producing an organ model containing an elastic passage according to claim 1, which comprises the following steps:
according to three-dimensional images of an organ, producing a first tissue mold and an elastic second tissue mold;
coating a surface of the first tissue mold with a first tissue material, so as to produce an elastic first artificial tissue having a closed end;
properly positioning the first artificial tissue in the second tissue mold;
introducing a gelatinous second tissue material into the second tissue mold to wrap the first artificial tissue;
making an interior of the first artificial tissue have a first pressure value;
applying a negative-pressure debubbling step to the second tissue material;
applying a freezing-and-thawing step to the second tissue material, so as to form a second artificial tissue, wherein during a thawing stage of the freezing-and-thawing step, a depressurizing-and-pressurizing step is applied to the interior of the first artificial tissue repeatedly below the first pressure value; and
removing the second tissue mold to finish production of the organ model containing the elastic passage.

Further embodiments of the invention are described in the dependent claims.

Preferably, the first pressure value is between 9 and **11** mmHg.

Preferably, the negative-pressure debubbling step is performed by placing the second tissue mold, the second tissue material, and the first artificial tissue in a single negative-pressure space, and maintaining a pressure value in the negative-pressure space at between -300 and -760 mmHg, so as to remove air bubbles from the second tissue material; the negative-pressure debubbling step is performed with progressive depressurization, which is realized by decreasing the pressure value in the negative-pressure space in a stepwise manner to: -300 mmHg, -460 mmHg, -610 mmHg, and - 760 mmHg, successively. The negative-pressure debubbling step lasts for between 1 and 3 hours.

Preferably, prior to introducing the second tissue material into the second tissue mold, a pre-debubbling step is performed, wherein the pre-debubbling step is performed by placing the second tissue material in a negative-pressure space, and maintaining a pressure value in the negative-pressure space at between -720 and -800 mmHg, so as to remove air bubbles from the second tissue material. More preferably, the second tissue material is injected into the second tissue mold in batches, until the second tissue mold is fully filled.

Preferably, the freezing-and-thawing step is performed by first freezing the second tissue material for 20~28 hours, thawing it for 10~14 hours, freezing it again for 20~28 hours, and at last thawing it again for 10~14 hours.

Preferably, the depressurizing-and-pressurizing step is performed by first decreasing the pressure value from 9~11 mmHg to 4~6 mmHg, and then increasing the pressure value from 4~6 mmHg to 9~11 mmHg.

Preferably, the three-dimensional images of the organ include a first tissue image and a second tissue image, wherein the first tissue image is a vascular image of blood vessels in the organ and the second tissue image is a body image of the organ, in which the first tissue mold is made of a meltable material according to the first tissue image through 3D printing, wherein the meltable material is polyvinyl alcohol (PVA).

Preferably, the first tissue material is silicon, and the first tissue material, after being applied to the first tissue mold, is set into shape by resting at room temperature for 8~12 hours, or by soaking in warm water of 80°C for 6~10 minutes.

Preferably, the first artificial tissue (artificial vessels) has a thickness of between 0.2 and 1.5 mm, and the first artificial tissue has an opening.

Preferably, the second tissue mold is provided therein with a second alignment unit, and the first artificial tissue is provided with a first alignment unit, wherein when the second alignment unit and the first alignment unit are aligned with each other, the first artificial tissue is properly positioned in the second tissue mold.

Preferably, the second tissue mold is a silicone mold.

With the technical features as described above, the present invention is expected to achieve the following efficacy:
1. The artificial hepatic vessels are made of silicon so is elastic. The artificial hepatic body is made of gel, which is formed through a freezing-and-thawing step during production of the artificial hepatic body. Particularly, in this freezing-and-thawing step, the artificial hepatic vessels wrapped by the gel undergo repeated depressurization and pressurization, making them in this stage alternately contract and expand. The resulting hepatic model features an artificial hepatic body having not only an extremely realistic hardness but also a proper stretchability. Thereby, the artificial hepatic body is able to accommodate expansion and contraction of artificial hepatic vessels contained therein caused by presence or absence of a fluid in or from the artificial hepatic vessels. This ability enables the artificial hepatic vessels to behave as real blood vessels varying with blood pressure variation, and makes the hepatic model very suitable for surgical practice.
2. In use of the produced organ model containing the elastic passage, a fluid is introduced into the elastic passage so that the elastic passage is held at a constant pressure, or subject to repeated pressurization and depressurization by adjusting supply of the fluid. The elastic passage is such made that it can be cut through by a scalpel when the organ model is used for surgical practice or demonstration. If the elastic passage is cut through, the fluid contained in the elastic passage can bleed or spray out like real blood, thereby achieving extremely realistic simulation.
3. The organ model so produced contains the elastic passage that realistically imitates vessels in human organs, thereby giving a user who uses the organ model for surgical practice the opportunity to be familiar with the maximum load the elastic passage can bear before getting damaged, thereby learning correct application of force through a scalpel.

### BRIEF DESCRIPTION OF THE DRAWINGS

FIG. 1 is a flowchart of the production method of the present invention.
FIG. 2 is a flowchart of the production method according to a particular embodiment of the present invention.
FIG. 3 is a schematic drawing of a first tissue mold according to the embodiment of the present invention.
FIG. 4 is a schematic drawing of a second artificial tissue mold according to the embodiment of the present invention.
FIG. 5 is a schematic drawing showing the first tissue mold coated with a first tissue material according to the embodiment of the present invention.
FIG. 6 is a partial cross-sectional view of a first artificial tissue according to the embodiment of the present invention.
FIG. 7 is a schematic drawing showing the first artificial tissue placed in the lower mold cavity of a second tissue mold according to the embodiment of the present invention.
FIG. 8 is a schematic drawing illustrating operation related to a negative-pressure space according to the embodiment of the present invention.
FIG. 9 is a schematic drawing of an organ model produced using the production method of the present invention.

### DETAILED DESCRIPTION OF THE INVENTION

The present invention method for producing an organ model containing an elastic passage and an organ model so produced, as well as technical features thereof, are further illustrated through the following embodiment. While the embodiment discussed below involves exemplificative production of a model of a human liver, organ models made using the method of the present invention are not limited to those imitating human livers, and the scope of the present invention instead encompasses organ models of all animal organs containing vessels and methods for producing these organ models.

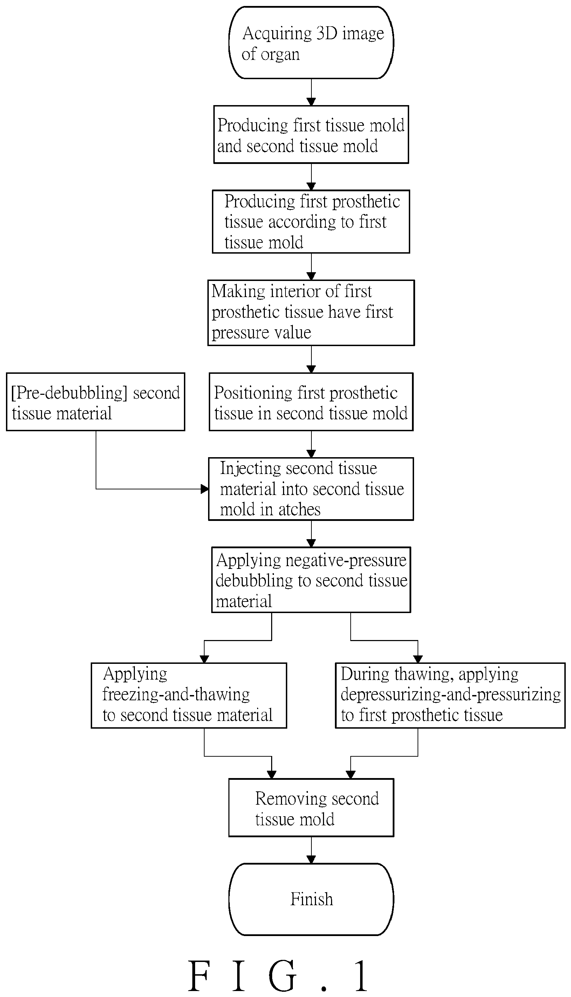

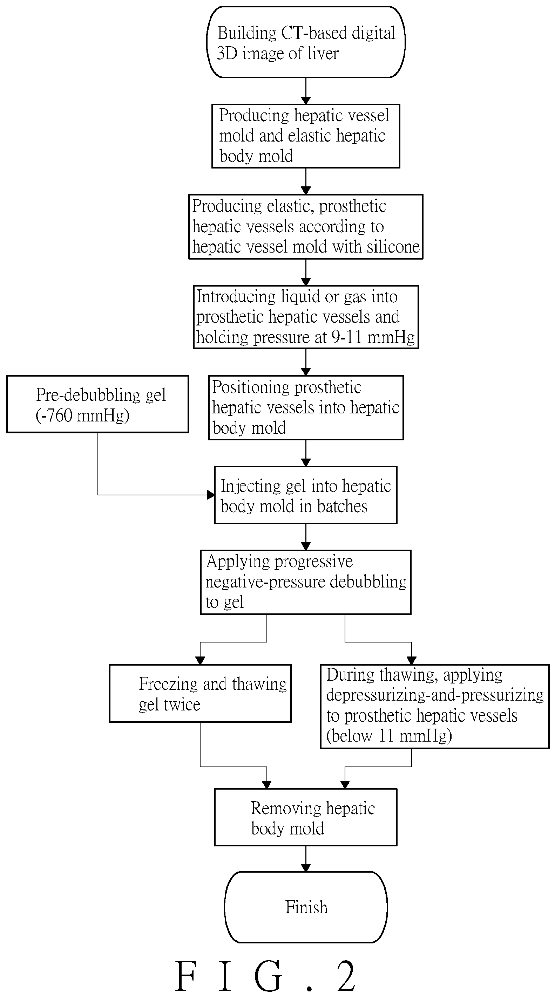

Referring to FIG. 1 and FIG. 2, the method for producing an organ model containing an elastic passage of present invention comprises the following steps.

First, a human liver is electronically recorded as images using computed tomography (CT) or physically acquired as a specimen using other medical means. Then digital three-dimensional images of the human liver are created according to the images or the specimen of the human liver. The digital three-dimensional images include hepatic vessel images and hepatic body images.

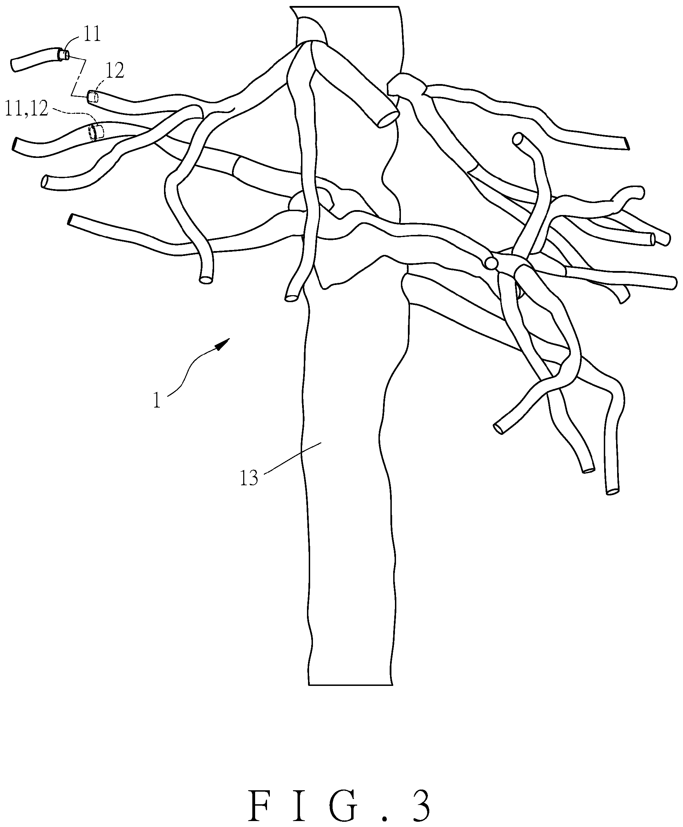

Referring to FIG. 1 and FIG. 2, in conjunction with FIG. 3, according to the hepatic vessel images, a solid first tissue mold 1 is produced through 3D printing. The first tissue mold 1 may be 3D-printed as an integer, or may be 3D-printed as separate segments and then assembled together, depending on complexity of the vessel pattern in the organ. Where the vessels are thin and highly branched, the first tissue mold 1 is preferably 3D-printed as separate segments and then assembled. In the present embodiment, the first tissue mold 1 is formed corresponding to a hepatic inferior vena cava (IVC). For concise description, the present embodiment is focused on the hepatic IVC, with the hepatic artery, the hepatic portal vein, and other vessels in a liver omitted. The hepatic vascular mold 1 is 3D-printed as separate segments and then assembled. Segmentation of the hepatic vascular mold 1 for 3D printing is determined strategically, and the segments are provided with mated tenons 11 and mortises 12. With combination of the tenons 11 and the mortises 12, the first tissue mold 1 can be assembled. In addition, the first tissue mold 1 comprises a main vessel 13. The main vessel 13 corresponds to the central main vein of the IVC. The first tissue mold 1 is made of a soluble material, a gasifiable material, or a meltable material. In the present embodiment, the first tissue mold 1 is made of water-soluble polyvinyl alcohol (PVA).

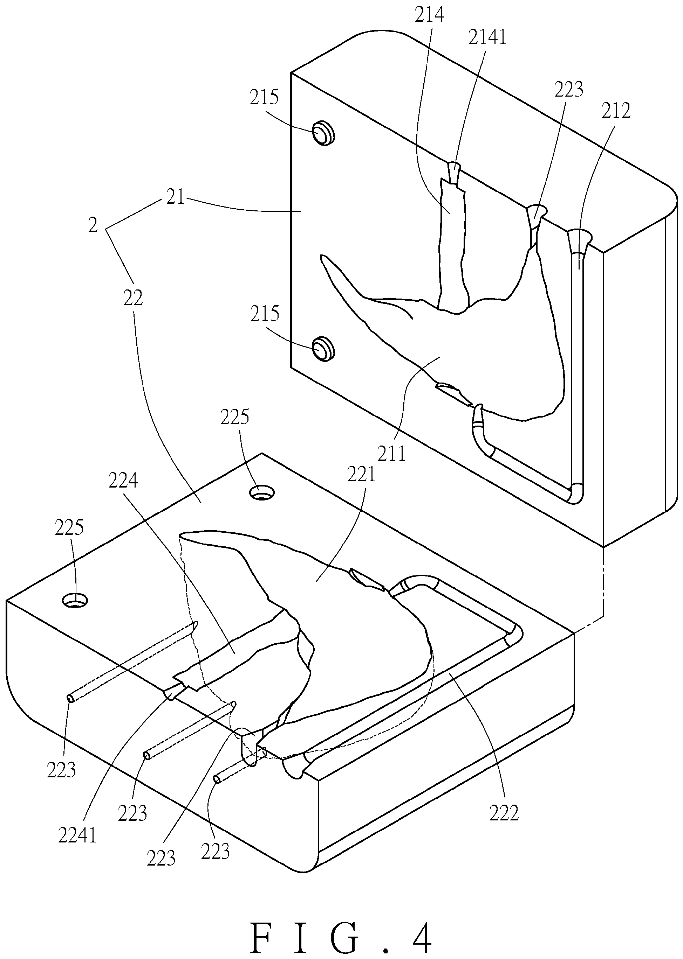

Referring to FIG. 1 and FIG. 2, in conjunction with FIG. 4, according to the foregoing hepatic body images, a second tissue mold 2 is produced. In the present embodiment, the second tissue mold 2 is a hepatic body mold. In the present embodiment, the second tissue mold 2 is made of a material containing 88~98.5 weight parts of silicon, 1.5~2 weight parts of a hardening agent, and optionally 0~10 weight parts of silicone oil, so as to make the second tissue mold 2 less viscid, moderately hard, elastic, and ductile. The second tissue mold 2 includes an upper mold 21 and a lower mold 22. The upper mold 21 has an upper mold cavity 211, an upper mold filling channel 212, a plurality of lower mold vents 213, a second upper alignment unit 214, and a plurality of guide pins 215. Therein, the second upper alignment unit 214 is shaped to a half of the hepatic IVC. The second upper alignment unit 214 at its end away from the upper mold cavity 211 is provided with an upper opening trough 2141. The lower mold 22 includes a lower mold cavity 221, a lower mold filling channel 222, a plurality of lower mold vents 223, a second lower alignment unit 224, and a plurality of guide holes 225. Therein, the lower mold vents 223 runs from the lower mold cavity 221 all the way to the surface of the lower mold 22. The second lower alignment unit 224 is shaped to the other half of the hepatic IVC. The second lower alignment unit 224 at tis end away from the lower mold cavity 221 is provided with a lower opening trough 2241. The second upper alignment unit 214 and the second lower alignment unit 224 jointly form a second alignment unit of the present invention. The second alignment unit corresponds to the IVC in the aforementioned hepatic vessel images.

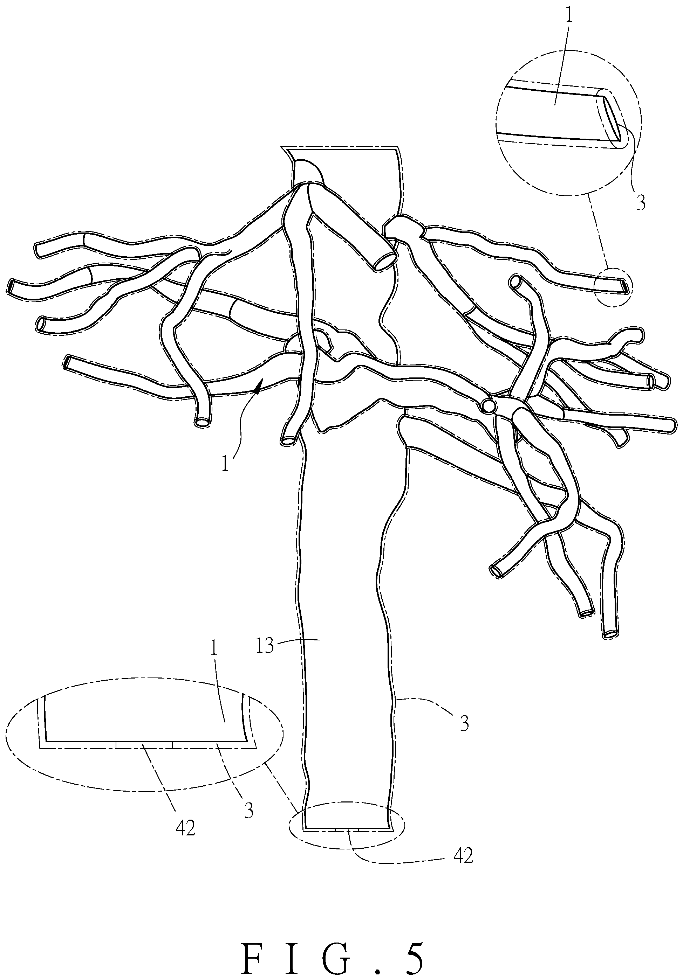

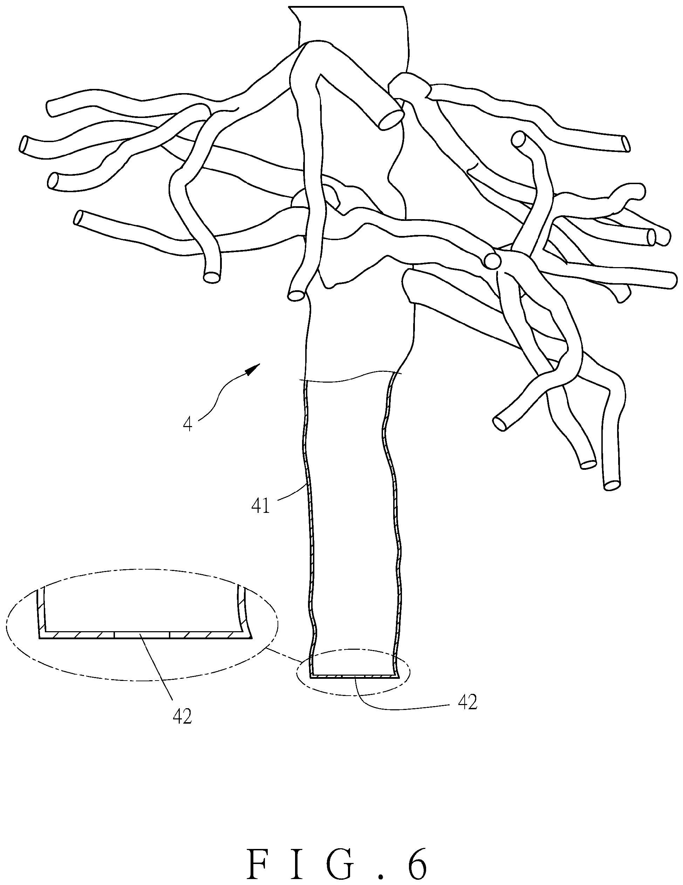

Referring to FIG. 1 and FIG. 2, in conjunction with FIG. 5 and FIG. 6, the first tissue mold 1 is coated with silicon 3. The silicon 3 used herein may be, for example, room-temperature-vulcanizing silicone rubber (RTV). The coating of the silicon 3 has a thickness between 0.2 and 1.5 mm, which is similar to the thickness of the wall of hepatic vessels. The coating of the silicon 3 leaves an opening 42 uncovered at the end of the main vessel 13. The coating of the silicon 3 is then set into shape by resting at room temperature for 8~12 hours, or by soaking in warm water of 80°C for 6~10 minutes for fast forming. In the present embodiment, the latter is adopted for shortening the overall production cycle. At this elevated temperature, the first tissue mold 1 made of the water-soluble polyvinyl alcohol is melted, leaving the coating of the silicon 3 formed as a first artificial tissue 4. The first artificial tissue 4 is an assembly of hollow artificial hepatic vessels, and it includes a first alignment unit 41, which corresponds to the IVC in the hepatic vessel images. The first artificial tissue 4 is hollow and each of its branch vessel is closed at the terminal except for the first alignment unit 41, which has the opening 42. The opening 42 is located at the free end of the first alignment unit 41. The formed first artificial tissue 4 has a Shore hardness of 8~10, a tensile strength of between 33 and 41 kg/cm², an elongation rate of between 400 and 600 %, and a tear resistance of between 21 and 25 kg/cm.

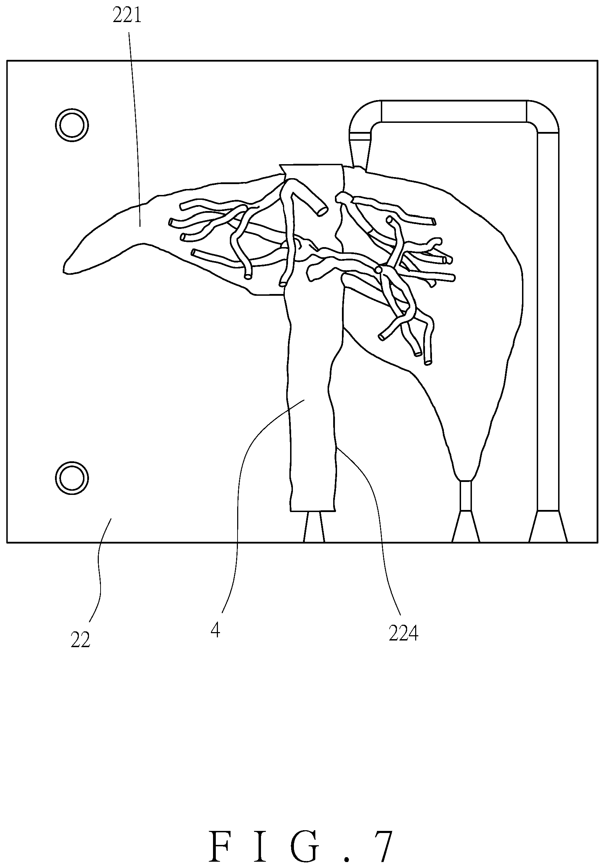

Referring to FIG. 1 and FIG. 2, in conjunction with FIG. 4, FIG. 7, and FIG. 8, the first artificial tissue 4 is placed in the lower mold cavity 221 of the second tissue mold 2, and then the upper mold 21 and the lower mold 22 are aligned and closed in virtue of the guide pins 215 and the guide holes 225. A film A is wound around the closed upper and lower molds 21, 22, so as to seal the upper and lower molds 21, 22. To further secure sealing between the upper mold 21 and the lower mold 22, a clamp (not shown in FIG. 7) may be used to hold the upper mold 21 and the lower mold 22 together. After the upper mold 21 and the lower mold 22 are closed, the first alignment unit 41 of the first artificial tissue 4 is located in the second alignment unit formed by the second upper alignment unit 214 and the second lower alignment unit 224. The opening 42 of the first artificial tissue 4 is aligned with a duct B defined by the upper opening trough 2141 and the lower opening trough 2241. With the first alignment unit 41 properly positioned in the second alignment unit, the first artificial tissue 4 is properly positioned in the second tissue mold 2.

Herein, gel is used as the second tissue material. The second tissue material first undergoes a pre-debubbling step, wherein the pre-debubbling step is performed by placing the second tissue material in a negative-pressure space, such as a vacuum barrel, and maintaining a pressure value in the negative-pressure space at between -720 and - 800 mmHg, thereby removing air bubbles from the second tissue material. During the pre-debubbling step, air bubbles escape from the second tissue material in flocks. The pre-debubbling step ends when there is no more air bubble coming out. The gel contains 2.5~15 weight parts of polyvinyl alcohol (PVA), 2.5~15 weight parts of glycerol, 69.5~94.5 weight parts of water, and 0.5 weight part of an aqueous dye. Therien, the aqueous dye is used to endow the second tissue material with the color of a living organ.

A first pipe 51 is connected to the opening 42 of the first artificial tissue 4 through the duct B. The first pipe 51 is also connected to a first pump 511. The first pump 511 introduce a liquid or a gas into the first artificial tissue 4, so as to hold the interior of the first artificial tissue 4 at a first pressure value, the first pressure value is between 9 and 11 mmHg.

When the upper mold 21 and the lower mold 22 are closed, the upper mold cavity 211 and the lower mold cavity 222 jointly form a combined cavity. The upper mold filling channel 212 and the lower mold filling channel 212 jointly form a combined filling channel. After the film A is wound around the upper mold 21 and the lower mold 22, punctures are made thereon at sites corresponding to the filling channel, the lower mold vent 223, and the duct B, so as to allow the filling channel, the lower mold vent 223, and the duct B to communicate with the exterior. Afterward, the second tissue material is filled into the mold cavity through the filling channel at one time or in batches, until the mold cavity is fully filled.

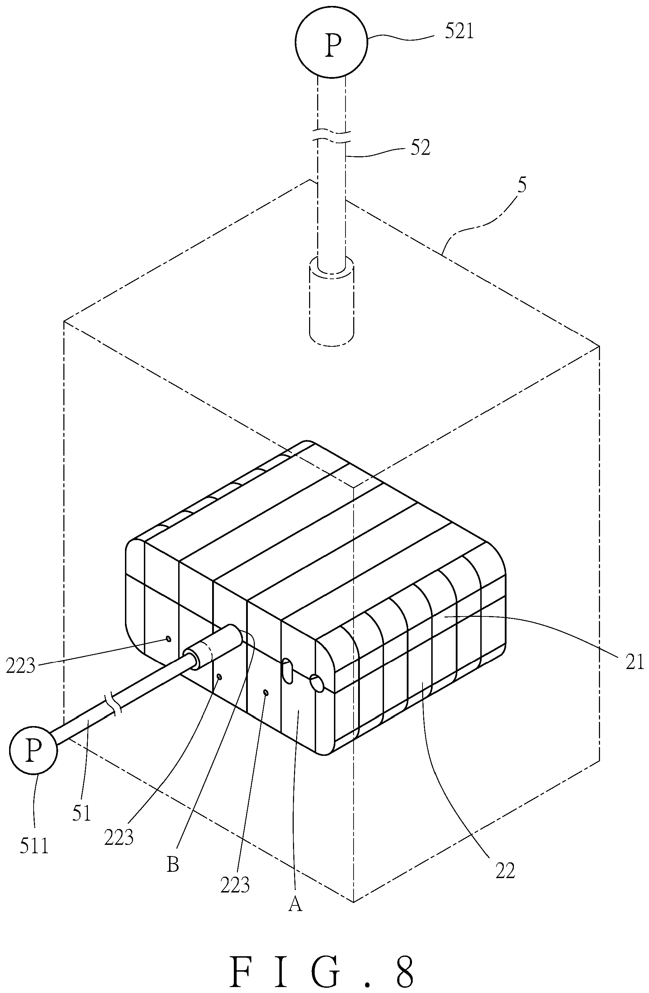

Referring to FIG. 1 and FIG. 2, in conjunction with FIG. 8, the upper mold 21 and the lower mold 22, which are now closed and have the second tissue material filled therebetween, are placed into a negative-pressure space 5, such as a vacuum barrel. The negative-pressure space 5 is communicated with a second pump 521 through a second pipe 52. The second pump 521 is used to control the pressure in the negative-pressure space 5. The first pipe 51 is connected to the opening 42 of the first artificial tissue 4. The second pump 521 controls the pressure inside the first artificial tissue 4. In the negative-pressure space 5, a negative-pressure debubbling step is performed. The negative-pressure debubbling step involves controlling the pressure value in the negative-pressure space 5 at between -300 and -760 mmHg for between 1 and 3 hours, so as to remove remaining air bubbles from the second tissue material. Preferably, progressive depressurization is implemented to remove air bubbles. As used herein, progressive depressurization refers to a process where the pressure value in the negative-pressure space 5 is decreased stepwise to -300 mmHg, -460 mmHg, -610 mmHg, and - 760 mmHg, successively. The removed air bubbles are allowed to escape through the plurality of vents. Additionally, a freezing-and-thawing step is applied to the second tissue material. The freezing-and-thawing step is performed by first freezing the second tissue material for 20~28 hours, thawing it for 10~14 hours, freezing it again for 20~28 hours, and at last thawing it again for 10~14 hours. During the thawing stage, a depressurizing-and-pressurizing step is performed on the first artificial tissue 4 repeatedly. The depressurizing-and-pressurizing step is about decreasing the pressure value from 9~11 mmHg to 4~6 mmHg, and then increasing the pressure value from 4~6 mmHg to 9~11 mmHg.

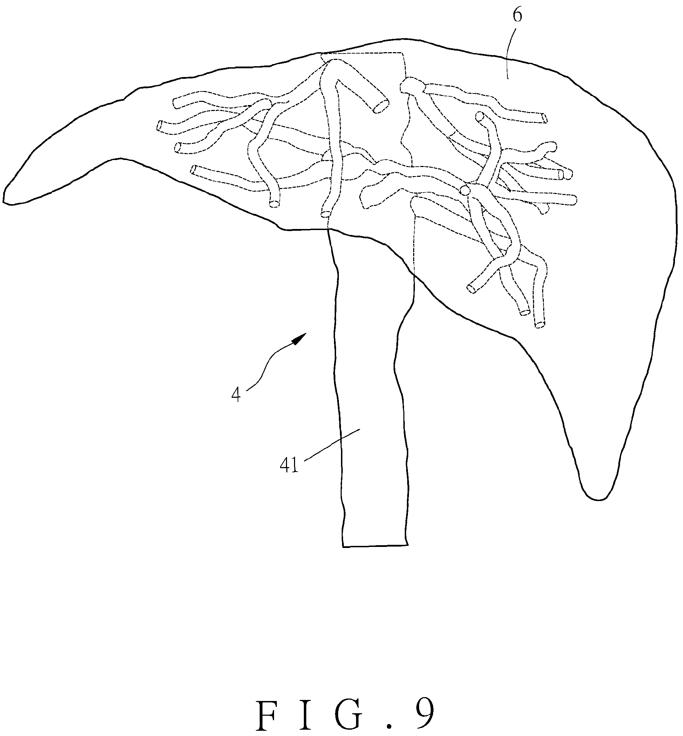

Referring to FIG. 1 and FIG. 2, in conjunction with FIG. 4, FIG. 7, and FIG. 9, the upper mold 21 and the lower mold 22 are removed to present an organ model containing an elastic passage. The passage-containing model comprises the first artificial tissue 4 and the second artificial tissue 6. The first artificial tissue 4 includes the artificial hepatic vessels, and the second artificial tissue 6 is the artificial hepatic body. The first artificial tissue 4 is covered by the second artificial tissue 6, the first alignment unit 41 of the artificial IVC is exposed outside the second artificial tissue 6.

The second artificial tissue 6 formed in the freezing-and-thawing step is properly stretchable. Since the first artificial tissue 4 repeatedly contracts and expands while undergoing alternate depressurization and pressurization during the thawing stage for forming the second artificial tissue 6, the formed second artificial tissue 6 is able to properly accommodate expansion and deformation of the first artificial tissue 4 contained therein. Thereby, the passage-containing model of the present invention allows the pressure inside the first artificial tissue 4 to be controllable by, or example, introducing a fluid with a controllable supplying pressure, so that the first artificial tissue 4 can realistically imitate vessels with diastolic and systolic blood pressures.

The present invention has been described with reference to the preferred embodiments and it is understood that the embodiments are not intended to limit the scope of the present invention. Moreover, as the contents disclosed herein should be readily understood and can be implemented by a person skilled in the art, all equivalent changes or modifications which do not depart from the concept of the present invention should be encompassed by the appended claims.

## Claims

1. A method for producing an organ model (6) containing an elastic passage (4) for being used in teaching and practicing surgical skills, wherein the method comprises the steps of:
according to three-dimensional images of an organ, producing a first tissue mold (1) and an elastic second tissue mold (2);
coating a surface of the first tissue mold (1) with a first tissue material, so as to produce an elastic first artificial tissue (4) having a closed end;
properly positioning the first artificial tissue (4) in the second tissue mold (2);
introducing a gelatinous second tissue material into the second tissue mold (2) to wrap the first artificial tissue (4);
making an interior of the first artificial tissue (4) have a first pressure value;
applying a negative-pressure debubbling step to the second tissue material;
applying a freezing-and-thawing step to the second tissue material, so as to form a second artificial tissue (6), wherein during a thawing stage of the freezing-and-thawing step, a depressurizing-and-pressurizing step is applied to the interior of the first artificial tissue (4) repeatedly below the first pressure value; and
removing the second tissue mold (2) to finish production of the organ model (6) containing the elastic passage (4).

2. The method of claim 1, being **characterized in that**: the first pressure value is between 9 and 11 mmHg.

3. The method of claim 1, being **characterized in that**: the negative-pressure debubbling step is performed by placing the second tissue mold (2), the second tissue material, and the first artificial tissue (4) in a single negative-pressure space (5), and maintaining a pressure value in the negative-pressure space (5) at between -300 and - 760 mmHg, so as to remove air bubbles from the second tissue material.

4. The method of claim 3, being **characterized in that**: the negative-pressure debubbling step is performed with progressive depressurization, which is realized by decreasing the pressure value in the negative-pressure space (5) in a stepwise manner to: -300 mmHg, -460 mmHg, -610 mmHg, and -760 mmHg, successively.

5. The method of claim 3, being **characterized in that**: the negative-pressure debubbling step lasts for between 1 and 3 hours.

6. The method of claim 1, being **characterized in that**: prior to introducing the second tissue material into the second tissue mold (2), a pre-debubbling step is performed, wherein the pre-debubbling step is performed by placing the second tissue material in a negative-pressure space (5), and maintaining a pressure value in the negative-pressure space (5) at between -720 and -800 mmHg, so as to remove air bubbles from the second tissue material.

7. The method of claim 1, being **characterized in that**: the second tissue material is injected into the second tissue mold (2) in batches, until the second tissue mold (2) is fully filled.

8. The method of claim 1, being **characterized in that**: the freezing-and-thawing step is performed by first freezing the second tissue material for 20~28 hours, thawing it for 10~14 hours, freezing it again for 20~28 hours, and at last thawing it again for 10~14 hours.

9. The method of claim 1, being **characterized in that**: the depressurizing-and-pressurizing step is performed by first decreasing the pressure value from 9~11 mmHg to 4~6 mmHg, and then increasing the pressure value from 4~6 mmHg to 9~11 mmHg.

10. The method of claim 1, being **characterized in that**: the three-dimensional images of the organ include a first tissue image and a second tissue image, wherein the first tissue image is a vascular image of blood vessels in the organ and the second tissue image is a body image of the organ, in which the first tissue mold (1) is made of a meltable material according to the first tissue image through 3D printing, wherein the meltable material is polyvinyl alcohol (PVA).

11. The method of claim 1, being **characterized in that**: the first tissue material is silicon, and the first tissue material, after being applied to the first tissue mold (1), is set into shape by resting at room temperature for 8~12 hours, or by soaking in warm water of 80°C for 6~10 minutes.

12. The method of claim 1, being **characterized in that**: the first artificial tissue (4) has a thickness of between 0.2 and 1.5 mm, and the first artificial tissue (4) has an opening (42).

13. The method of claim 1, being **characterized in that**: the second tissue mold (2) is provided therein with a second alignment unit, and the first artificial tissue (4) is provided with a first alignment unit (41), wherein when the second alignment unit and the first alignment unit (41) are aligned with each other, the first artificial tissue (4) is properly positioned in the second tissue mold (2).

14. The method of claim 1, being **characterized in that**: the second tissue mold (2) is a silicone mold (2).

## Patentansprüche

1. Verfahren zur Herstellung eines Organmodells (6), das einen elastischen Durchgang (4) enthält und zum Lehren und Üben chirurgischer Fertigkeiten bestimmt ist, umfassend die folgenden Schritte:
Herstellen einer ersten Gewebeform (1) und einer elastischen zweiten Gewebeform (2) gemäß 3D-Bildern eines Organs,
Beschichten einer Oberfläche der ersten Gewebeform (1) mit einem ersten Gewebematerial, um ein elastisches erstes künstliches Gewebe (4) mit einem geschlossenen Ende zu bilden,
Positionieren des ersten künstlichen Gewebes (4) ordnungsgemäß in der zweiten Gewebeform (2),
Einbringen eines gallertartigen zweiten Gewebematerials in die zweite Gewebeform (2), um das erste künstliche Gewebe (4) zu umhüllen,
Einstellen eines ersten Druckwertes im Inneren des ersten künstlichen Gewebes (4),
Anwenden eines Vakkum-Entlüftungsschritt auf das zweite Gewebematerial,
Anwenden eines Gefrier-Auftau-Verfahrens auf das zweite Gewebematerial, um ein zweites künstliches Gewebe (6) zu bilden, wobei während der Auftauphase des Gefrier-Auftau-Verfahrens ein wiederholter Druckentlastungs- und Druckbeaufschlagungsschritt auf das Innere des ersten künstlichen Gewebes (4) unterhalb des ersten Druckwertes angewendet wird, und
Entfernen der zweiten Gewebeform (2), um die Herstellung des Organmodells (6) mit dem elastischen Durchgang (4) abzuschließen.

2. Verfahren nach Anspruch 1, **dadurch gekennzeichnet, dass** der erste Druckwert zwischen 9 und 11 mmHg liegt.

3. Verfahren nach Anspruch 1, **dadurch gekennzeichnet, dass** der Vakkum-Entlüftungsschritt durchgeführt wird, indem die zweite Gewebeform (2), das zweite Gewebematerial und das erste künstliche Gewebe (4) in einer gemeinsamen Unterdruckkammer (5) angeordnet werden und der Druckwert in dieser Unterdruckkammer (5) zwischen -300 und -760 mmHg gehalten wird, um Luftblasen aus dem zweiten Gewebematerial zu entfernen.

4. Verfahren nach Anspruch 3, **dadurch gekennzeichnet, dass** der Vakkum-Entlüftungsschritt mit fortschreitender Druckabsenkung durchgeführt wird, wobei der Druckwert in der Unterdruckkammer (5) stufenweise auf -300 mmHg, -460 mmHg, -610 mmHg und -760 mmHg abgesenkt wird.

5. Verfahren nach Anspruch 3, **dadurch gekennzeichnet, dass** der Vakkum-Entlüftungsschritt eine Dauer von 1 bis 3 Stunden aufweist.

6. Verfahren nach Anspruch 1, **dadurch gekennzeichnet, dass** vor dem Einbringen des zweiten Gewebematerials in die zweite Gewebeform (2) ein Vorentlüftungsschritt durchgeführt wird, wobei der Vorentlüftungsschritt dadurch erfolgt, dass das zweite Gewebematerial in einer Unterdruckkammer (5) gebracht und der Druckwert in der Unterdruckkammer (5) zwischen -720 und -800 mmHg gehalten wird, um Luftblasen aus dem zweiten Gewebematerial zu entfernen.

7. Verfahren nach Anspruch 1, **dadurch gekennzeichnet, dass** das zweite Gewebematerial chargenweise in die zweite Gewebeform (2) eingespritzt wird, bis die zweite Gewebeform (2) vollständig gefüllt ist.

8. Verfahren nach Anspruch 1, **dadurch gekennzeichnet, dass** der Gefrier- und Auftauschritt dadurch durchgeführt wird, dass das zweite Gewebematerial zunächst 20 bis 28 Stunden gefroren, anschließend 10 bis 14 Stunden aufgetaut, danach erneut 20 bis 28 Stunden gefroren und schließlich wieder 10 bis 14 Stunden aufgetaut wird.

9. Verfahren nach Anspruch 1, **dadurch gekennzeichnet, dass** der Druckentlastungs- und Druckbeaufschlagungsschritt dadurch durchgeführt wird, dass der Druckwert zunächst von 9 bis 11 mmHg auf 4 bis 6 mmHg abgesenkt und anschließend wieder von 4 bis 6 mmHg auf 9 bis 11 mmHg erhöht wird.

10. Verfahren nach Anspruch 1, **dadurch gekennzeichnet, dass** die 3D-Bildern des Organs ein erstes Gewebebild und ein zweites Gewebebild aufweisen, wobei das erste Gewebebild ein Gefäßbild der Blutgefäße im Organ und das zweite Gewebebild ein Körperbild des Organs ist, und wobei die erste Gewebeform (1) gemäß dem ersten Gewebebild aus einem schmelzbaren Material mittels 3D-Druck hergestellt wird, wobei das schmelzbare Material Polyvinylalkohol (PVA) ist.

11. Verfahren nach Anspruch 1, **dadurch gekennzeichnet, dass** das erste Gewebematerial Silikon ist und dass das erste Gewebematerial nach dem Auftragen auf die erste Gewebeform (1) bei Raumtemperatur 8 bis 12 Stunden ruhen gelassen oder durch Eintauchen in warmes Wasser von 80 °C für 6 bis 10 Minuten in Form gebracht wird.

12. Verfahren nach Anspruch 1, **dadurch gekennzeichnet, dass** das erste künstliche Gewebe (4) eine Dicke zwischen 0,2 und 1,5 mm aufweist und dass das erste künstliche Gewebe (4) eine Öffnung (42) hat.

13. Verfahren nach Anspruch 1, **dadurch gekennzeichnet, dass** die zweite Gewebeform (2) eine zweite Ausrichtungseinheit und das erste künstliche Gewebe (4) eine erste Ausrichtungseinheit (41) aufweist, wobei, wenn die zweite Ausrichtungseinheit und die erste Ausrichtungseinheit (41) aufeinander ausgerichtet sind, das erste künstliche Gewebe (4) ordnungsgemäß in der zweiten Gewebeform (2) positioniert ist.

14. Verfahren nach Anspruch 1, **dadurch gekennzeichnet, dass** die zweite Gewebeform (2) eine Silikonform (2) ist.

## Revendications

1. Procédé de fabrication d'un modèle d'organe (6) contenant un passage élastique (4) destiné à être utilisé dans l'enseignement et la pratique des techniques chirurgicales, le procédé comprenant les étapes suivantes :
à partir d'images tridimensionnelles d'un organe, fabriquer un premier moule à tissu (1) et un second moule à tissu élastique (2) ;
recouvrir une surface du premier moule à tissu (1) d'une première matière tissulaire, de manière à produire un premier tissu artificiel élastique (4) présentant une extrémité fermée ;
positionner correctement le premier tissu artificiel (4) dans le second moule à tissu (2) ;
introduire une seconde matière tissulaire gélatineuse dans le second moule à tissu (2) afin d'envelopper le premier tissu artificiel (4) ;
faire en sorte qu'un intérieur du premier tissu artificiel (4) présente une première valeur de pression ;
appliquer une étape de débullage par pression négative à la seconde matière tissulaire ;
appliquer une étape de congélation et décongélation à la seconde matière tissulaire, de manière à former un second tissu artificiel (6), pendant une phase de décongélation de l'étape de congélation et décongélation, une étape de dépressurisation et pressurisation est appliquée à l'intérieur du premier tissu artificiel (4) de manière répétée en dessous de la première valeur de pression ; et
retirer le second moule à tissu (2) pour finir production du modèle d'organe (6) contenant le passage élastique (4).

2. Procédé selon la revendication 1, **caractérisé par le fait que** la première valeur de pression est comprise entre 9 et 11 mmHg.

3. Procédé selon la revendication 1, **caractérisé par le fait que** l'étape de débullage par pression négative est réalisée en plaçant le second moule à tissu (2), la seconde matière tissulaire, et le premier tissu artificiel (4) dans un unique espace à pression négative (5), et en maintenant une valeur de pression dans l'espace à pression négative (5) comprise entre - 300 et -760 mmHg, de manière à éliminer les bulles d'air de la seconde matière tissulaire.

4. Procédé selon la revendication 3, **caractérisé par le fait que** l'étape de débullage par pression négative est réalisée grâce à une dépressurisation progressive, obtenue en diminuant la valeur de pression dans l'espace à pression négative (5) de manière progressive à : -300 mmHg, -460 mmHg, -610 mmHg, et -760 mmHg, successivement.

5. Procédé selon la revendication 3, **caractérisé par le fait que** l'étape de débullage par pression négative dure entre 1 et 3 heures.

6. Procédé selon la revendication 1, **caractérisé par le fait qu'**avant d'introduire la seconde matière tissulaire dans le second moule à tissu (2), une étape de pré-débullage est réalisée, l'étape de pré-débullage étant réalisée en plaçant la seconde matière tissulaire dans un espace à pression négative (5), et en maintenant une valeur de pression dans l'espace à pression négative (5) comprise entre -720 et -800 mmHg, afin d'éliminer les bulles d'air de la seconde matière tissulaire.

7. Procédé selon la revendication 1, **caractérisé par le fait que** la seconde matière tissulaire est injectée dans le second moule à tissu (2) par lots, jusqu'à ce que le second moule à tissu (2) soit entièrement rempli.

8. Procédé selon la revendication 1, **caractérisé par le fait que** l'étape de congélation et décongélation est réalisée en congelant d'abord la seconde matière tissulaire pendant 20~28 heures, en la décongelant pendant 10~14 heures, en la congelant à nouveau pendant 20~28 heures, puis en la décongelant à nouveau pendant 10~14 heures.

9. Procédé selon la revendication 1, **caractérisé par le fait que** l'étape de dépressurisation et pressurisation est réalisée en diminuant d'abord la valeur de pression de 9~11 mmHg à 4~6 mmHg, puis en augmentant la valeur de pression de 4~6 mmHg à 9~11 mmHg.

10. Procédé selon la revendication 1, **caractérisé par le fait que** les images tridimensionnelles de l'organe comprennent une première image tissulaire et une deuxième image tissulaire, la première image tissulaire est une image vasculaire des vaisseaux sanguins de l'organe et la deuxième image tissulaire est une image corporelle de l'organe, dans lequel le premier moule à tissu (1) est fabriqué à partir d'une matière fusible selon la première image de tissu par impression 3D, la matière fusible étant de l'alcool polyvinylique (PVA).

11. Procédé selon la revendication 1, **caractérisé par le fait que** la première matière tissulaire est du silicone, et la première matière tissulaire, après avoir été appliquée au premier moule à tissu (1), est mise en forme en la laissant reposer à température ambiante pendant 8~12 heures, ou en la trempant dans de l'eau chaude à 80°C pendant 6~10 minutes.

12. Procédé selon la revendication 1, **caractérisé par le fait que** le premier tissu artificiel (4) a une épaisseur comprise entre 0,2 et 1,5 mm, et le premier tissu artificiel (4) comporte une ouverture (42).

13. Procédé selon la revendication 1, **caractérisé par le fait que** le second moule à tissu (2) comporte une seconde unité d'alignement, et le premier tissu artificiel (4) comporte une première unité d'alignement (41), lorsque la seconde unité d'alignement et la première unité d'alignement (41) sont alignées l'une par rapport à l'autre, le premier tissu artificiel (4) est correctement positionné dans le second moule à tissu (2).

14. Procédé selon la revendication 1, **caractérisé par le fait que** le second moule à tissu (2) est un moule en silicone (2).
